Europäisches Patentamt

European Patent Office

Office européen des brevets

(11) Veröffentlichungsnummer: **0 250 883**
**A2**

# (12) EUROPÄISCHE PATENTANMELDUNG

(21) Anmeldenummer: 87107801.0

(22) Anmeldetag: 29.05.87

(51) Int. Cl.⁴: **G10K 11/16 , B32B 7/00**

(30) Priorität: 26.06.86 DE 3621318

(43) Veröffentlichungstag der Anmeldung:
07.01.88 Patentblatt 88/01

(84) Benannte Vertragsstaaten:
**DE FR GB IT NL SE**

(71) Anmelder: **Fried. Krupp Gesellschaft mit
beschränkter Haftung
Altendorfer Strasse 103
D-4300 Essen 1(DE)**

(72) Erfinder: **Arens, Egidius
Cordstrasse 13
D-2807 Achim(DE)**

(54) **Dämpfungsschicht.**

(57) Daempfungsschichten zur Daempfung von Biegewellen enthalten Daempfungsmaterial mit hohem inneren Verlustfaktor. Um duennere Schichtdicken bei gleichem Daempfungsverhalten zu erzielen, werden auf Biegewellen abstrahlende Teile abwechselnd Lagen aus Daempfungsmaterial und Fasermatten hoher Zugfestigkeit, vorzugsweise Kohlenstoff-Fasermatten, aufgebracht. Besonders vorteilhaft ist der Einsatz einer solchen Daempfungsschicht in U-Booten.

EP 0 250 883 A2

## Daempfungsschicht

Die Erfindung betrifft eine Daempfungsschicht der im Oberbegriff des Anspruchs 1 genannten Art zur Daempfung von Biegeschwingungen.

In Wandungen von Fahrzeugen treten Biegeschwingungen auf, die durch Vibrationen von im Fahrzeug befindlichen Antriebsaggregaten (Motoren) und/oder Geraeten verursacht werden. Die Biegeschwingungen werden von der Wandung als Stoerschall abgestrahlt. Besonders nachteilig machen sich Biegeschwingungen beispielsweise auf U-Booten bemerkbar, da sie als Stoerschall oder Koerperschall von der eigenen Sonaranlage empfangen werden und somit Ortungsmoeglichkeiten von Zielen herabsetzen.

Es ist bereits aus dem Handbuch von Brueel & Kjaer, "Messungen von Mechanischen Schwingungen und Stoessen", September 1970, bekannt, dass Biegeschwingungen in einem Konstruktionsteil dadurch gedaempft werden, dass die Oberflaeche mit einem Material mit hohem inneren Verlustfaktor beschichtet wird. Ein solches Daempfungsverfahren wird beispielsweise in der Kraftfahrzeugindustrie angewendet. Die Daempfung ist um so wirkungsvoller, je dicker die Beschichtung mit beispielsweise viskoelastischem Material als Daempfungsmaterial vorgenommen wird, wobei die Daempfung mit dem Quadrat des Verhaeltnisses der Schichtdicken des viskoelastischen Materials und der Wandung steigt. Dabei werden in der Praxis Schichtdicken erzielt, die ein Mehrfaches der Dicke der Wandung betragen.

Problematisch wird das Anbringen einer Daempfungsschicht mit genuegend hoher Daempfung, wenn der Platz fuer die Beschichtung begrenzt ist, wie beispielsweise im Innenraum von Fahrzeugen, insbesondere U-Booten.

Der Erfindung liegt die Aufgabe zugrunde, eine Daempfungsschicht der eingangs genannten Art zu schaffen, die der Wandung folgend als duenne Schicht wirksam Biegeschwingungen daempft.

Die Aufgabe wird erfindungsgemaess durch die im Kennzeichenteil des Anspruchs 1 angegebenen Merkmale geloest. Auf Konstruktionsteile, die Biegewellen abstrahlen, wird eine Lage aus einem elastischen oder viskoelastischem Material mit hohen inneren Verlusten aufgebracht. Als elastisches oder viskoelastisches Material ist Gummi, Polyurethan, Entdroehnungsmittel oder Schallschluck-Ueberzugsmasse vorteilhaft einsetzbar. Eine als zweite Lage angeordnete Fasermatte weist zumindest in Ausbreitungsrichtung der Biegewellen eine hohe Zugfestigkeit auf. Die Zug-/Druckkraefte bei der Biegung des Konstruktionsteils werden im Daempfungsmaterial in extreme Scherkraefte umgewandelt und durch den hohen inneren Verlustfaktor des Daempfungsmaterials gedaempft. Besonders wirkungsvoll ist eine Anordnung der Lagen gemaess Anspruch 2.

Der besondere Vorteil der erfindungsgemaessen Daempfungsschicht nach Anspruch 1 und 2 besteht darin, dass sie einfach auf jedes Konstruktionsteil aufbringbar ist, da beispielsweise viskoelastisches Material als Daempfungsmaterial aehnlich einem Farbanstrich aufstreichbar ist und die Fasermatte in beliebige Formen zu biegen ist, so dass sie in einfacher Weise auch kompliziert geformten Wandungen folgen kann.

Der Vorteil der Weiterbildung der erfindungsgemaessen Daempfungsschicht nach Anspruch 3 liegt darin, dass die Daempfungsschicht nicht mit einem speziellen Verbindungsmittel, beispielsweise in Form eines Klebers, an den Konstruktionsteilen befestigt zu werden braucht.

Durch die vorteilhafte Weiterbildung der Daempfungsschicht nach Anspruch 4 ist ein Aufbau an konstruktiv komplizierten Wandungen besonders einfach realisierbar.

Da Fasermatten hoher Zugfestigkeit extrem duenn herstellbar sind, besteht gemaess der vorteilhaften Ausgestaltung nach Anspruch 5 der Vorteil, die Lage mit dem Daempfungsmaterial wesentlich dicker zu gestalten, als die Lage der Fasermatte und trotzdem eine duenne Daempfungsschicht zu erzielen. Die biegesteife Lage weist dann einen Abstand zu dem zu Biegeschwingungen angeregten Konstruktionsteil auf, der mit dem die Scherspannungen aufnehmenden und daempfenden Material gefuellt ist. Die Dicke der Lage des Daempfungsmaterials betraegt aber dabei nicht ein Mehrfaches der Schichtdicke des Konstruktionsteils, um ein solches Daempfungsverhalten zu erzielen, wie beispielsweise bei den herkoemmlichen Beschichtungen mit Daempfungsmaterial allein.

Besonders vorteilhaft ist es, gemaess Anspruch 6 Fasermatten aus Kohlenstoffasern zu verwenden, da sich mit diesem Werkstoff Fasermattenlagen hoher Zugfestigkeit extrem duenn und damit biegsam realisieren lassen. Beispielsweise betraegt die Dicke einer solche Lage 3/10 mm.

Der Aufbau einer Daempfungsschicht nach Anspruch 7 mit mehreren Fasermatten zwischen Lagen aus Daempfungsmaterial ermoeglicht ein Absorptionsverhalten gegenueber Biegewellen, wie Daempfungsschichten mit Sandwichstruktur, bei denen auf eine viskoelastische Schicht ein duennes Metallblatt aufgebracht ist. Gegenueber der Sandwichbauweise hat die Daempfungsschicht nach Anspruch 7 aber den entscheidenden Vorteil, dass bei der Aufbringung keine Einschraenkungen durch Metallschichtdicken auftreten, sondern vielmehr die Daempfungsschicht beliebig geformt anbringbar ist und ueber der gesamten Wandung gleich dick aufgebaut werden kann.

Durch die vorteilhaften Weiterbildungen der Daempfungsschicht nach den Anspruechen 8, 9 und 10 ist das frequenzabhaengige Uebertragungsverhalten der Konstruktionsteile mit Daempfungsschicht so beeinflussbar, dass ein gerader Frequenzgang erzielt wird und sich keine ausgepraegten Eigenschwingungen oder Moden im Konstruktionsteil mehr ausbilden koennen.

Durch den extrem duennen Aufbau und die hohe Guete dieser Daempfungsschicht ist eine Verwendung gemaess Anspruch 11 besonders vorteilhaft, da in U-Booten nur ausserordentlich raumsparende Daempfungsschichten aufgebracht werden koennen, um die Funktionstuechtigkeit des U-Boots weiterhin zu garantieren. Insbesondere weist die erfindungsgemaesse Daempfungsschicht eine geringe Masse und geringes Gewicht auf, so dass das Manoevrierverhalten des U-Boots nicht beeinflusst wird.

Der Vorteil der Verwendung der erfindungsgemaessen Daempfungsschicht nach Anspruch 12 besteht darin, dass eine Ausbreitung von Biegeschwingungen in Maschinenfundamenten verhindert wird, die im U-Boot auch in diesen Konstruktionsteilen auftreten koennen, obwohl Motoren und andere sich drehende Maschinen gefedert aufgestellt werden, da ihre Masse wegen der Tauchfaehigkeit nicht beliebig gross gewaehlt werden kann.

Abhaengig vom Verwendungszweck ist als Daempfungsmaterial mit hohem inneren Verlustfaktor ein elastischer oder viskoelastischer Werkstoff gemaess Anspruch 13 einsetzbar.

Die Ansprueche 14 und 15 geben ein Verfahren zum Herstellen einer Daempfungsschicht nach der Erfindung an, das sich durch besondere Einfachheit auszeichnet. Durch das Andruecken der Fasermatten an die vorherige Lage aus beispielsweise viskoelastischem Material ist die Fasermatte problemlos an die Koerperwandung anformbar, so dass das Konstruktionsteil lueckenlos durch die Daempfungsschicht nachformbar ist. Der Vorteil als letzte Lage ein viskoelastisches Material aufzuspachteln besteht darin, dass gleichzeitig mit dieser Lage ein Anstrich des Konstruktionsteils gegeben ist.

Die Erfindung ist anhand von einem in der Zeichnung dargestellten Ausfuehrungsbeispiel fuer eine Daempfungsschicht zur Daempfung von Biegewellen dargestellt.

Es zeigen:

Fig. 1 ausschnittsweise eine mit einem Konstruktionsteil verbundene Daempfungsschicht

Fig. 2 ein Diagramm des Daempfungsverlaufs als Funktion der Frequenz.

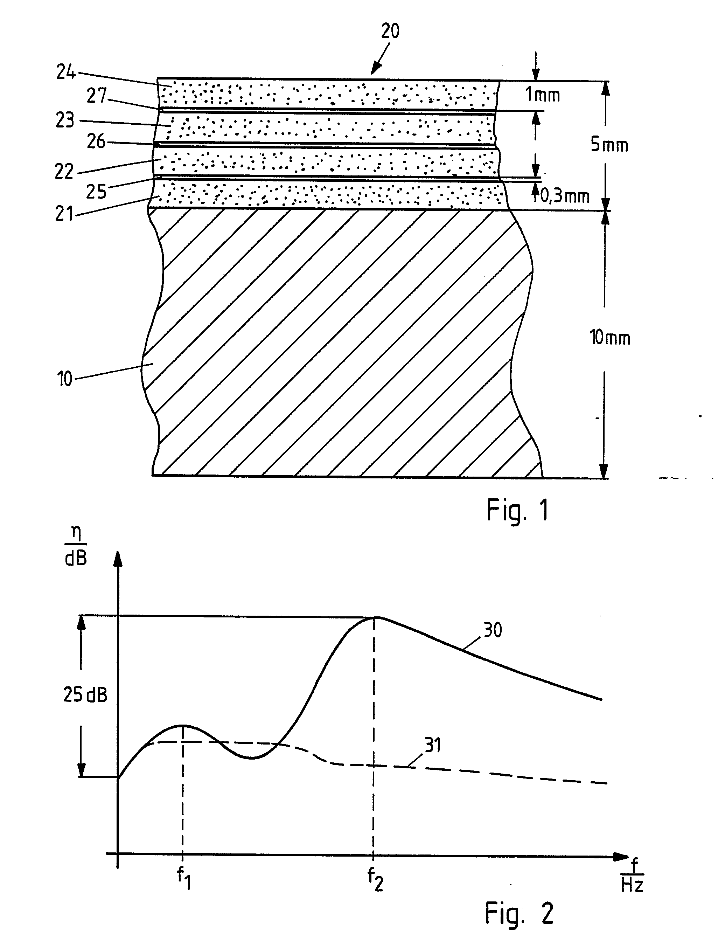

Fig. 1 zeigt als Schnittdarstellung einen Ausschnitt einer beispielsweise 10 mm dicken Wandung (10) eines Konstruktionsteils, auf dem eine Daempfungsschicht (20) aufgetragen ist. Das Konstruktionsteil ist mit Biegeschwingungen beaufschlagt. Die Daempfungsschicht (20) besteht aus mehreren Lagen (21, 22, 23, 24) eines elastischen oder viskoelastischen Materials mit hohem inneren Verlustfaktor als Daempfungsmaterial, z. B. Gummi oder Entdroehnungsmittel, und aus dazwischenliegenden Lagen (25, 26 und 27) in Form von Fasermatten hoher Zugfestigkeit, z. B. Kohlenstoff-Fasermatten. Die einzelnen Lagen (21, 25, 22, 26, 23, 27, 24) sind innig miteinander und die erste Lage (21) mit der Wandung (10) verbunden.Die Strukturen der einzelnen Lagen (21, 25, 22, 26, 23, 27, 24) welchseln sich dabei ab, so dass immer eine Fasermattenlage und eine Daempfungsmateriallage aufeinanderfolgen. Die erste und vorzugsweise auch die letzte Lage (21, 24) ist jeweils aus Daempfungsmaterial.

Die Dicke der Lagen (21, 22, 23, 24) aus Daempfungsmaterial ist gleich und betraegt ungefaehr 1 mm, die Dicke der Lagen (25, 26, 27) in Form von Fasermatten ist mit ca. 0,3 mm wesentlich geringer. Die gesamte Daempfungsschicht (20) weist eine Dicke von ca. 5 mm auf, ist also ungefaehr halb so dick, wie die Wandung, auf die die Daempfungsschicht (20) aufgebracht ist.

Als Daempfungsmaterial ist beispielsweise eine Schallschluckueberzugsmasse der Firma Stankiewicz mit der Bezeichnung 2K 601 und als Fasermatten Kohlenstoff-Fasermatten verwendet worden, die im Handel erhaeltlich sind und beispielsweise im Flugzeugbau eingesetzt werden.

Die Kohlenstoff-Fasermatten weisen eine gitterfoermige Struktur mit Leinenbindung auf, wobei jeweils mehrere Fasern zu Kette und/oder Schuss zusammengefasst sind.

In dem in Fig. 1 gezeigten Beispiel bestehen die Lagen (21, 22, 23, 24) aus Daempfungsmaterial mit jeweils gleichem Aufbau und gleichen Eigenschaften, die Lagen (25, 26, 27) aus gleichen Fasermatten. Ebenfalls ist es moeglich, Daempfungsmaterial mit unterschiedlichen Elastizitaets-Moduli und Fasermatten aus unterschiedlichen Werkstoffen je Lage einzusetzen.

Bei der Herstellung der Daempfungsschicht (20) wird als erstes die Schallschluckueberzugsmasse auf die Wandung (10) so duenn wie moeglich aufgespachtelt. Die Wandung (10) muss gut gesaeubert und ggf. rostfrei sein. Auch ist es moeglich, ueber einen Anstrich die Schallschluckueberzugsmasse aufzutragen. Unverzueglich wird auf diese Lage die Kohlenstoff-Fasermatte aufgedrueckt, so dass die beiden Lagen gut miteinander verbunden sind und auf der Wandung (10) festkleben. Anschliessend wird wieder Schallschluckueberzugsmasse aufgespachtelt usw.. Nach einer Haertungszeit weist die so hergestellte, mehrlagige Daempfungsschicht ein Daempfungsverhalten auf, wie es beispielshaft in Fig. 2 angegeben ist.

Fig. 2 zeigt das frequenzabhaengige Daempfungsverhalten einer mehrere Lagen enthaltenden Daempfungsschicht, die auf eine Stahlplatte von 10 mm Dicke aufgebracht worden ist. Als Ordinate ist die Frequenz f/Hz und als Abszisse die Daempfung $\eta$/dB aufgetragen. Die Kurve (30) zeigt die Einhuellende der sich als Moden ausbreitenden Biegeschwingungen in der unbeschichteten Stahlplatte. Man erkennt deutlich zwei Maxima bei zwei Frequenzen ($f_1$ und $f_2$). Ziel der Biegewellendaempfung oder Koerperschalldaempfung ist es, die Maxima so zu daempfen, dass das Daempfungsverhalten ueber der Frequenz konstant ist. Mit einer Beschichtung der Stahlplatte mit einer mehrlagigen Daempfungsschicht, wie sie beispielhaft in Fig.1 dargestellt ist, ist eine Daempfung von mehr als 20 dB entsprechend der Kurve (31) erzielt worden.

Im Ausfuehrungsbeispiel ist als Wandung ein Ausschnitt eines Konstruktionsteils gezeigt. Vorzugsweise ist diese Wandung Teil der Innen-oder Aussenwand eines U-Boots oder ines eine Maschine tragenden Fundaments.

## Ansprüche

1. Daempfungsschicht, die Daempfungsmaterial mit hohem inneren Verlustfaktor zur Daempfung von Biegeschwingungen enthaelt, gekennzeichnet durch mindestens eine Lage (21, 22, 23, 24) aus Daempfungsmaterial und mindestens eine Lage (25, 26, 27) in Form einer Fasermatte mit zumindest in Ausbreitungsrichtung der Biegewellen hoher Zugfestigkeit.

2. Daempfungsschicht nach Anspruch 1, dadurch gekennzeichnet, dass die Lage (21) aus Daempfungsmaterial den Biegewellen abstrahlenden Teilen naeher als die Lage (25) in Form der Fasermatte angeordnet ist.

3. Daempfungsschicht nach Anspruch 2, dadurch gekennzeichnet, dass das Daempfungsmaterial die erste Lage (21) und zugleich Verbindungsmittel zu Biegewellen abstrahlenden Teilen bildet und die Fasermatte die daran anschliessende zweite Lage (25) bildet.

4. Daempfungsschicht nach Anspruch 3, dadurch gekennzeichnet, dass die Fasermatte in das Daempfungsmaterial eingebettet ist.

5. Daempfungsschicht nach einem der Ansprueche 1 bis 4, dadurch gekennzeichnet, dass die Dicke der Fasermattenlage wesentlich geringer als die Dicke der Lage aus Daempfungsmaterial ist.

6. Daempfungsschicht nach einem der Ansprueche 1 bis 5, dadurch gekennzeichnet, dass die Fasermatte aus Kohlenstoffasern besteht.

7. Daempfungsschicht nach einem der Ansprueche 2 bis 6, dadurch gekennzeichnet, dass auf die zweite Lage (25) folgende Lagen (22, 26, 23, 27, 24) abwechselnd aus Daempfungsmaterial und Fasermatte bestehen.

8. Daempfungsschicht nach Anspruch 7, dadurch gekennzeichnet, dass die Dicken der Lagen (21, 22, 23, 24) aus Daempfungsmaterial gleich sind.

9. Daempfungsschicht nach Anspruch 8, dadurch gekannzeichnet, dass das Daempfungsaterial je Lage (21, 22, 23, 24) unterschiedliche Elastizitaets-Moduli aufweist.

10. Daempfungsschicht nach einem der Ansprueche 1 bis 9, dadurch gekennzeichnet, dass die Fasermatten je Lage (25, 26, 27) aus unterschiedlichen Werkstoffen bestehen.

11. Daempfungsschicht nach einem der Ansprueche 1 bis 10, gekennzeichnet durch die Aufbringung auf Aussenund/oder Innenwaenden eines U-Boots.

12. Daempfungsschicht nach einem der Ansprueche 1 bis 11, gekennzeichnet durch die Aufbringung auf Fundamente fuer Antriebsaggregate in U-Booten.

13. Daempfungsschicht nach einem der Ansprueche 1 bis 12, dadurch gekennzeichnet, dass das Daempfungsmaterial ein elastischer oder viskoelastischer Werkstoff ist.

14. Verfahren zum Herstellen einer Daempfungsschicht nach einem der Ansprueche 1 bis 13, dadurch gekennzeichnet, dass das Daempfungsmaterial der ersten Lage (21) auf das saubere, ggf. von Rost befreite oder einen Anstrich aufweisende, die Biegewellen abstrahlende Teil duenn aufgespachtelt wird, dass die zweite Lage (25) in Form der Fasermatte auf die erste Lage (21) aufgedrueckt wird und darauf ohne Zeitverzug die naechste Lage (22) aus Daempfungsmaterial aufgespachtelt wird, auf die die naechste Fasermatte aufgedrueckt wird usw..

15. Verfahren nach Anspruch 14, dadurch gekennzeichnet. dass als letzte Lage (24) Daempfungsmaterial aufgespachtelt wird.

24
27
23
26
22
25
21

20

1mm

5mm

0,3mm

10mm

10

## Fig. 1

$\frac{\eta}{dB}$

25 dB

30

31

f$_1$

f$_2$

$\frac{f}{Hz}$

## Fig. 2